# EUROPEAN PATENT APPLICATION

(11) **EP 4 312 453 A1**
(43) Date of publication of application: **31.01.2024**
(21) Application number: 22186894.6
(22) Date of filing: 26.07.2022
(51) Int. Cl.: H04W 56/00, G06N 20/00

(54) **METHODS AND DEVICES FOR CONFIGURATION OF A TIMING ADVANCE IN RADIO COMMUNICATION NETWORKS**

(71) Applicant: INTEL Corporation, Santa Clara, CA 95054 (US)
(72) Inventor: SIVANESAN, Kathiravetpillai, Portland OR, 97229 (US); VANNITHAMBY, Rath, Portland OR, 97229 (US)
(74) Representative: Viering, Jentschura & Partner mbB Patent- und Rechtsanwälte

(57) **Abstract**

A device may include a processor configured to obtain input data based on channel information representing attributes associated with an established communication channel of a communication device and context information representing attributes associated with the location of the communication device, provide the input data to a trained machine learning model, the trained machine learning model configured to determine a timing parameter representing a propagation delay for a transmission using the established communication channel based on the input data, and configure timing of an uplink transmission of the communication device via the established communication channel based on the determined timing parameter.

## Description

### Technical Field

This disclosure generally relates to methods and devices for configuration of a timing advance for radio communication.

### Background

In various wireless radio communication technologies, there are various techniques that are applied to communicate in designated time and frequency resources. There are certain factors that may affect the propagation time of a radio communication signal in an established communication channel, such as distance between communication nodes or environmental effects causing the radio communication signal to propagate in various ways. In particular, when the radio communication is a mobile radio communication, such as Fourth Generation (LTE) and Fifth Generation (5G) New Radio (NR), in which a receiver node is also configured to communicate with a plurality of other nodes (e.g. base station, radio unit, etc.), the propagation time may cause the radio communication signals transmitted by a transmitter node to not to arrive precisely at the time resource that is allocated for the transmitter node. In order to prevent collusions of radio communication signals transmitted by nodes, that are scheduled to be received by the receiver node within adjacent time resources due to different propagation times for radio communication signals transmitted by different nodes, the time which a transmitter node is allowed to transmit radio communication signals can be adjusted with a timing advance, so that for an allocated time resource, the transmitter node may transmit radio communication signals with proper timing.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows exemplary radio communication network;
FIG. 2 shows an exemplary internal configuration of a communication device;
FIG. 3 shows an example showing various aspects associated with timing advance in cellular communication;
FIG. 4 shows an example of a device according to various examples in this disclosure;
FIG. 5 shows an example of a processor and a memory of a device according to various aspects provided in this disclosure;
FIG. 6 shows an example of an AI/ML;
FIG. 7 shows an example of uplink transmission timing procedure between a BS and a UE;
FIG. 8 shows an example of uplink transmission timing procedure between a BS and a UE;
FIG. 9 shows an example of uplink transmission timing procedure between a BS, a UE, and another entity implementing an AI/ML;
FIG. 10 shows an example of a reconfiguration of timing of uplink transmissions of a UE;
FIG. 11 shows an exemplary representation of the architecture of an LSTM;
FIG. 12 shows an exemplary representation of a reinforcement learning model based AI/ML;
FIG. 13 shows an exemplary radio access network architecture in which the radio access network is disaggregated in multiple units;
FIG. 14 exemplarily shows an illustration of a radio access network;
FIG. 15 shows an example of a method.

### Description

The following detailed description refers to the accompanying drawings that show, by way of illustration, exemplary details and aspects in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

Any vector and/or matrix notation utilized herein is exemplary in nature and is employed solely for purposes of explanation. Accordingly, the apparatuses and methods of this disclosure accompanied by vector and/or matrix notation are not limited to being implemented solely using vectors and/or matrices, and that the associated processes and computations may be equivalently performed with respect to sets, sequences, groups, etc., of data, observations, information, signals, samples, symbols, elements, etc.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

In cellular communication, a base station (BS) may estimate timing advance to be applied by a user equipment (UE) based on received physical random access channel (PRACH) request received from the UE. The BS may send timing advance information to the UE in a random access response (RAR). Furthermore, once the UE is connected to the BS over a communication channel, the BS may perform further estimations and update timing advance to be applied by the UE by sending further timing advance information. The BS may send timing advance information with a medium access control (MAC) control element (CE). The timing advance information may be sent as a timing advance command. Based on the received timing advance information, the UE may adjust the timing of its uplink transmissions to the BS.

The timing advance information may indicate, or represent, a timing advance value that the UE may use to provide a timing advance relative to an allocated time slot for an uplink transmission. The time slot may be a subframe (e.g. an uplink subframe or a downlink subframe). The timing advance information may indicate, or represent, a timing advance value that the UE may use to provide a timing advance relative to a previously indicated timing advance or relative to the current configuration of the UE to apply a first timing advance. In such an example, the UE may adjust the currently applied timing advance based on the received timing advance value.

The BS may estimate the timing advance for the UE based on an estimated path loss value in the uplink. The estimation of the timing advance may include inaccuracies, in particular, in scenarios which the BS does not have a clear line of sight with the UE. The present disclosure may provide various aspects associated with the configuration of timing advance that a communication device, such as a UE, may apply for uplink transmissions to a further communication device, such as a BS.

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth^{®}, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("12V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 790-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5-28.35 GHz, 29.1-29.25 GHz, 31-31.3 GHz, 37-38.6 GHz, 38.6-40 GHz, 42-42.5 GHz, 57-64 GHz, 64-71 GHz, 71-76 GHz, 81-86 GHz and 92-94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz-71 GHz band, any band between 65.88 GHz and 71 GHz, bands currently allocated to automotive radar applications such as 76-81 GHz, and future bands including 94-300 GHz and above. Furthermore, the apparatuses and methods described herein can also employ radio communication technologies on a secondary basis on bands such as the TV White Space bands (typically below 790 MHz) where e.g. the 400 MHz and 700 MHz bands are prospective candidates. Besides cellular applications, specific applications for vertical markets may be addressed such as PMSE (Program Making and Special Events), medical, health, surgery, automotive, low-latency, drones, etc. applications. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e. unidirectional or bidirectional communication in one or both of the incoming and outgoing directions. The term "calculate" encompass both 'direct' calculations via a mathematical expression/formula/relationship and 'indirect' calculations via lookup or hash tables and other array indexing or searching operations. The term "channel state information" is used herein to refer generally to the wireless channel for a wireless transmission between one or more transmitting antennas and one or more receiving antennas and may take into account any factors that affect a wireless transmission such as, but not limited to, path loss, interference, and/or blockage.

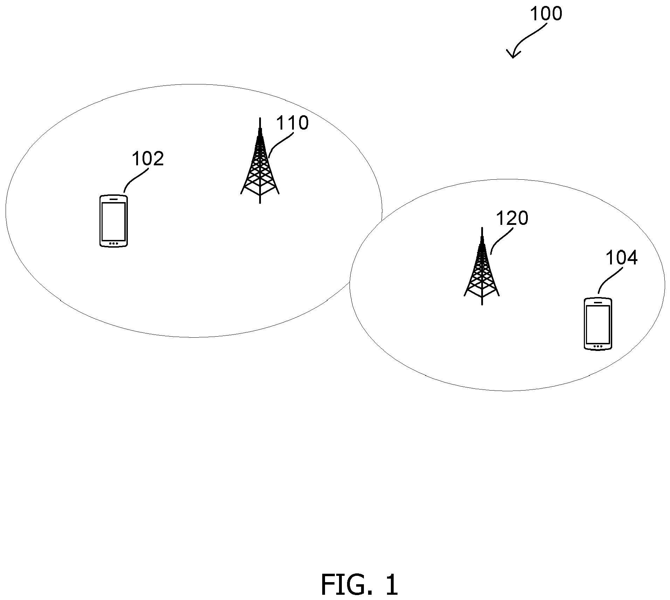

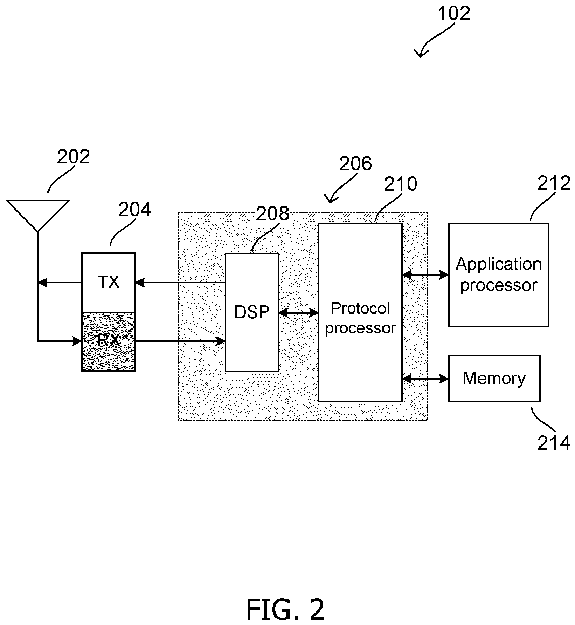

FIGs. 1 and 2 depict a general network and device architecture for wireless communications. In particular, FIG. 1 shows exemplary radio communication network 100 according to some aspects, which may include terminal devices 102 and 104 and network access nodes 110 and 120. Radio communication network 100 may communicate with terminal devices 102 and 104 via network access nodes 110 and 120 over a radio access network. Although certain examples described herein may refer to a particular radio access network context (e.g., LTE, UMTS, GSM, other 3rd Generation Partnership Project (3GPP) networks, WLAN/WiFi, Bluetooth, 5G NR, mmWave, etc.), these examples are demonstrative and may therefore be readily applied to any other type or configuration of radio access network. The number of network access nodes and terminal devices in radio communication network 100 is exemplary and is scalable to any amount.

In an exemplary cellular context, network access nodes 110 and 120 may be base stations (e.g., eNodeBs, NodeBs, Base Transceiver Stations (BTSs), gNodeBs, or any other type of base station), while terminal devices 102 and 104 may be cellular terminal devices (e.g., Mobile Stations (MSs), User Equipments (UEs), or any type of cellular terminal device). Network access nodes 110 and 120 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. The cellular core network may interface with one or more external data networks. In an exemplary short-range context, network access node 110 and 120 may be access points (APs, e.g., WLAN or WiFi APs), while terminal device 102 and 104 may be short range terminal devices (e.g., stations (STAs)). Network access nodes 110 and 120 may interface (e.g., via an internal or external router) with one or more external data networks. Network access nodes 110 and 120 and terminal devices 102 and 104 may include one or multiple transmission/reception points (TRPs).

Network access nodes 110 and 120 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access nodes 110 and 120 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). In an exemplary short-range context, the radio access network provided by network access nodes 110 and 120 may provide access to internal data networks (e.g., for transferring data between terminal devices connected to radio communication network 100) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access nodes 110 and 120 may follow the defined communication protocols to transmit and receive data over the radio access network domain of radio communication network 100, while the core network may follow the defined communication protocols to route data within and outside of the core network. Exemplary communication protocols include LTE, UMTS, GSM, WiMAX, Bluetooth, WiFi, mmWave, etc., any of which may be applicable to radio communication network 100.

FIG. 2 shows an exemplary internal configuration of a communication device according to various aspects provided in this disclosure. The communication device may include a terminal device 102, and it will be referred to as terminal device 102, but the communication device may also include various aspects of network access nodes 110, 120 as well. The terminal device 102 may include antenna system 202, radio frequency (RF) transceiver 204, baseband modem 206 (including digital signal processor 208 and protocol controller 210), application processor 212, and memory 214. Although not explicitly shown in FIG. 2, in some aspects terminal device 102 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Terminal device 102 may transmit and receive radio signals on one or more radio access networks. Baseband modem 206 may direct such communication functionality of terminal device 102 according to the communication protocols associated with each radio access network, and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of terminal device 102 shown in FIG. 2 depicts only a single instance of such components.

Terminal device 102 may transmit and receive wireless signals with antenna system 202. Antenna system 202 may be a single antenna or may include one or more antenna arrays that each include multiple antenna elements. For example, antenna system 202 may include an antenna array at the top of terminal device 102 and a second antenna array at the bottom of terminal device 102. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Terminal device 102 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of terminal device 102 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of terminal device 102 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio terminal device 102 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Terminal device 102 may also include application processor 212 and memory 214. Application processor 212 may be a CPU, and may be configured to handle the layers above the protocol stack, including the transport and application layers. Application processor 212 may be configured to execute various applications and/or programs of terminal device 102 at an application layer of terminal device 102, such as an operating system (OS), a user interface (UI) for supporting user interaction with terminal device 102, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of terminal device 102, such as a hard drive or another such permanent memory device. Although not explicitly depicted in FIG. 2, the various other components of terminal device 102 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112. Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

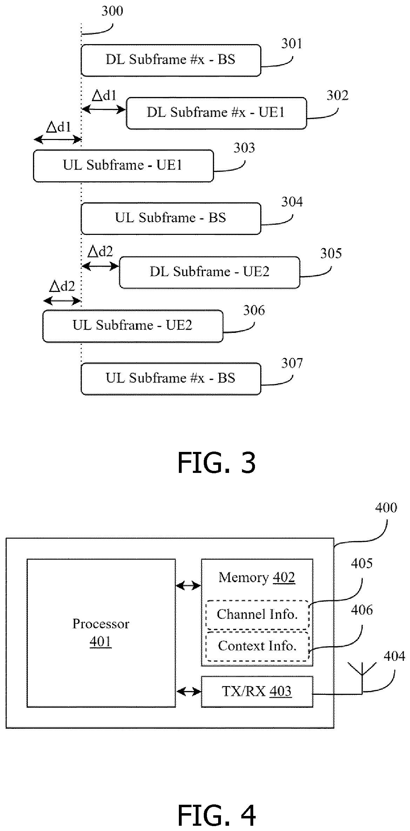

FIG. 3 shows an example showing various aspects associated with timing advance in cellular communication. A BS is configured to communicate with UEs in designated time resources. The time resources may include subframes allocated for communication. A downlink (DL) subframe 301 that is allocable by the BS for downlink communication is aligned with an instance of time 300. In other words, line 300 indicates an instance of time of a downlink subframe. When the BS performs transmission within the DL subframe 301, radio communication signals transmitted within the DL subframe 301 may be received 302 by a first UE (UE1) with a delay Δd1 (e.g. propagation delay) that is based on propagation conditions associated with the established communication channel between the BS and the UE1. The propagation conditions may be based on a distance between the BS and a UE, and it may also be affected by further conditions that may affect the communication channel, such as terrain conditions, in particular, when the BS does not have a direct line of sight with the UE. In order to align an uplink (UL) transmission to the BS, the UE1 may configure the timing of the uplink transmission associated with an UL subframe 303 with an advance of Δd1 based on the instance of time 300 representing the instance of time of the beginning of the downlink subframe of BS 301, or with an advance of 2^{∗}Δd1 based on the timing of the downlink frame of UE1 302, so that the BS may receive the uplink transmission aligned with its subframe timing 304.

As indicated, the delay that is based on propagation conditions and accordingly, the propagation delay may be different for a second UE (UE2). In this illustrated example, the UE2 would have received the transmission of the BS associated with the downlink subframe 302 with a delay Δd2 305 that is based on propagation conditions associated with the established communication channel between the BS and the UE2. Accordingly, the UE2 might have configured the timing of an uplink transmission associated with uplink subframe of the UE2 306 with an advance that is based on the delay Δd2, so that the BS would have received the uplink transmission aligned with its subframe timing 307.

In order to reduce inter-symbol interference that may be caused by collusion of radio communication signals received from different UEs within allocated subframes, the BS may estimate the timing advance for each UE and send timing advance commands to configure the UEs based on the estimated timing advances for UEs. Based on a received timing advance command, a UE may initiate a timing control procedure in the MAC layer with MAC layer functions. The output of the timing control procedure at the MAC layer may control physical (PHY) layer functions for timing adjustment of an uplink transmission by applying a timing advance based on the received timing advance command. The present disclosure provides various aspects associated with the estimation of timing advance and configuration of uplink transmissions based on the estimated timing advance.

In various aspects, the estimation of timing advance to be applied by a communication device may include a determination of a timing parameter by using an artificial intelligence/machine learning (AI/ML) model. The timing parameter may represent a delay associated with propagation conditions within an established radio communication channel. The delay may be a propagation delay. The determination may be based on various information including channel information associated with an established radio communication channel. The channel information may indicate, or may represent, attributes associated with an established communication channel. The determination may be based on context information associated with the location of the communication device, such as terrain type, kinematic attributes, etc. Information that the determination is based on may be communicated to the entity that performs the determination via various methods, such as methods used for a minimization of drive tests (MDT), or other types of messages designated to communicate the information. The determination of the timing parameter may include determining a timing parameter for a current time or for a time instance in future.

In various aspects, the configuration of uplink transmissions may include configuring the timing of an uplink transmission to be transmitted by the same communication device or of an uplink transmission to be transmitted by another communication device. In order to configure the timing of an uplink transmission of another device, aspects may include sending a message to the another device in order to trigger the configuration of the timing of the uplink transmission. The message, or a further message to be sent to the another device, may include a determined timing parameter. Further aspects may include sending a signal or a control message to trigger a MAC layer function or PHY layer function of the communication device.

In various aspects, a UE or a BS may perform various operations to determine the timing parameter as provided within this disclosure. The BS may include an evolved node B (eNB) or a next generation node B (gNB). In various examples, the BS may have a distributed (or split) architecture, such as a baseband unit (BBU) and a centralized unit (CU, or a control unit), or a radio unit (RU), a distributed unit (DU) and a centralized unit (CU, or a control unit) according to an open radio access network (O-RAN) structure, and in a distributed architecture, any one of the entities associated with the BS may perform various operations disclosed herein. In such a distributed architecture, entities associated with the BS may perform various operations disclosed herein in a distributed manner, such as one of the entities (e.g. RU) may receive information, one of the entities (e.g. CU) may perform determination, and one of the entities (e.g. DU) may configure timing of an uplink transmission of a UE. In various aspects another entity within a network (e.g. a near-real time radio access network intelligent controller, near-RT RIC, and/or a non-real time RIC), that is able to communicate the determined timing parameter to the UE (which the communication may be through a BS) may perform various operations including determining the timing parameter for the UE. In various examples, a UE itself may determine the timing parameter and configure timing of an uplink transmission to be transmitted to a BS.

In various examples, the timing parameter may be, or may include, a timing advance value, or a parameter that may indicate or represent a timing advance. In various examples, the timing advance value may be, may indicate, or may represent, a period of time to be applied for timing advance. In various examples, the timing advance value may be, or may include, or represent, a number that can be used to calculate the timing advance. The timing value may include an offset. In various examples, the timing advance value may indicate, or represent, a period of time relative to an uplink frame or a downlink frame.

For example, a UE may be configured to configure timing of an uplink transmission by configuring an uplink frame #x for the uplink transmission to start the uplink transmission with a timing advance T_{TA}=(N_{TA} + N_{TA,offset})^{∗}T_{c} before the start of the corresponding downlink frame at the UE, N_{TA,offset} being a timing advance offset (e.g. 0, 13792, 25600, 39936), T_{c} being a basic time unit associated with the technology (e.g. basic time unit for 5G NR system, 0.509 ns). N_{TA} parameter may be 0 for a PRACH, or it may be based on a determined timing parameter as provided in this disclosure. For example, the determined timing parameter may be a timing advance parameter (T_{A}) may include any one of integer numbers between 0 and 3846 for a first configuration of the timing parameter. In that case, N_{TA} parameter may be set to T_{A}^{∗}16^{∗}64/2^{µ}, µ being the numerology associated with the subcarrier spacing of the communication. The determined timing parameter (T_{A}) may include any one of integer numbers between 0 and 63 for a relative indication, or representation, of timing advance that is relative to a previously configured timing advance or N_{TA} or timing advance parameter. For example, in such a case, the N_{TA} parameter may be set to N_{TA,old}+(T_{A}-31)^{∗}16^{∗}64/2^{µ} . In consideration of definitions provided herein, in various aspects of this disclosure, the determined timing parameter may include, or may indicate, or may represent, any one of T_{TA}, N_{TA}, (N_{TA}+N_{TA,offset}), or T_{A}.

FIG. 4 shows an example of a device 400 according to various examples in this disclosure. The device 400 is depicted as a radio communication device in this illustrative example, including a processor 401, a memory 402, and a transceiver 403 configured to receive and transmit radio communication signals using an antenna element 404. The illustration depicts that there is one antenna element 404 coupled to the transceiver 403, however, this should not be considered as limiting, and the device 400 may be coupled to any number of antenna elements. The transceiver 403 may include a plurality of antenna ports couplable to a plurality of antenna elements. The processor 401 may include one or more processors which may include a baseband processor and an application processor. In various examples, the processor 401 may include a central processing unit, a graphics processing unit, a hardware acceleration unit, a neuromorphic chip, and/or a controller. The processor 401 may be implemented in one processing unit, e.g. a system on chip (SOC), or a processor. In accordance with various examples, the processor 401 may further provide further functions to process received radio communication signals. The memory 402 may store various types of information required for the processor 401, or the transceiver 403 to operate in accordance with various aspects of this disclosure.

The memory 402 may be configured to store channel information 405. The channel information 405 may include information representing various attributes associated or related to an established communication channel of a radio communication device. The channel information 405 may include at least one of one or more measurements performed for the established communication channel, and/or in-phase-quadrature samples of received radio communication signals, and/or frequency domain components of received radio communication signals, and/or a signal strength indicator such as a received signal strength indicator (RSSI) obtained based on received radio communication signals, and/or a reference signal power indicator such as reference signal received power (RSRP) obtained based on received radio communication signals, and/or path loss parameters obtained for the established communication channel. In various examples, the channel information may further include a timing parameter associated with timing advance of current or previous uplink transmissions of the radio communication device. In various examples, the channel information may further include any other forms of processed signals based on received radio communication signals via the established communication channel.

The memory 402 may be configured to store context information 406 associated with or related to the radio communication device, in particular information including various attributes that may affect propagation conditions of the established communication channel, such as information related to the location of the radio communication device. The context information may include information location information (e.g. a distance to the other end of the established communication channel, position information), and/or a condition of the terrain associated with the location of the radio communication device (e.g. a metric indicating, or representing, at least whether the terrain may cause reflections associated with radio communication signals), and/or a velocity of the radio communication device, and/or a heading of the radio communication device, and/or a trajectory associated with the radio communication device, and/or previous channel information associated with previous locations of the radio communication device.

In accordance with various aspects of this disclosure, a BS may include the device 400, and the channel information and the context information may be channel information and context information of a UE that is connected to the BS over the established communication channel. In accordance with various aspects of this disclosure, a UE may include the device 400, and the channel information and the context information may be channel information and context information of the UE that is connected to a BS over the established communication channel. In accordance with various aspects of this disclosure, another entity that is able to communicate with the BS (e.g. a RIC) may include the device 400, and the channel information and the context information may be channel information and context information of a UE that is connected to a BS over the established communication channel.

In accordance with various examples, in particular, when the device 400 is a device of an entity other than a UE, the device 400 may receive the channel information 405 and/or the context information 406 from another radio communication device (e.g. the UE or another entity that may communicate with the UE) via the transceiver 403 and store the channel information 405 and the context information 406 in the memory 402. For example, the device 400 may receive at least the context information 406 of a UE from the UE via the transceiver 403. The device 400 may receive at least a portion of the channel information 405 stored in the memory 402 for the established communication channel between the device and the UE from the UE. The UE may send the channel information 405 to the BS by using MDT. According to the MDT mechanism, the UE may perform various measurements and encode information associated with the measurements to send the encoded information via one or more messages to the device 400. Accordingly, the device 400 may receive the one or more messages. For example, such a message may be, or may include, an rrcConnectionSetupComplete message or a UEInformationResponse message. The UE may transmit such messages in response to performing a measurement to be reported, or in response to a request (e.g. UEInformationRequest) received from the device 400. In various examples, the transceiver 403 may include a measurement circuit that may measure the received radio communication signals. Accordingly, the processor 401 may obtain the channel information 405 based on the measurements performed by the measurement circuit, in particular when the device 400 is a device of a UE or a BS. In various examples, the processor 401 may perform measurements based on signals or metrics obtained for the received radio communication signals (e.g. IQ samples, FFT samples, etc.).

Furthermore, the processor 401 may further be configured to obtain the context information 406 associated with the location of the device 400 via various methods. In particular, when the device 400 operate in a UE, the device 400 may obtain the context information 406 based on detected position of the device 400. The device 400 may be configured to determine a position by using Global Navigation Satellite Systems (GNSS), such as Global Positioning Satellite (GPS) systems or other type of positioning methods used by radio access networks. The measurement circuit (or another measurement circuit) of the transceiver may be configured to perform measurements on received radio communication signals to be used to determine position of the device 400 relative to the position of the entity that sends the radio communication signals to the device 400. The processor 401 may be configured to obtain further information associated with the location of the device 400 to include in the context information 406 based on the location of the device 400 by performing further queries based on the location via the radio communication network or another network.

The processor 401 may be configured to determine a timing parameter to be used to configure timing of an uplink transmission of a communication device within the established communication channel that the channel information is based on for the communication device configured to communicate within the established communication channel. The timing parameter may include, or may indicate, or may represent, any one of T_{TA}, N_{TA}, (N_{TA}+N_{TA,offset}), or T_{A}. The processor 401 may be configured to determine the timing parameter based on the channel information and/or the context information using an AI/ML model. The determined timing parameter may represent a timing parameter determined for an uplink transmission to be performed for a future instance of time (i.e. a predicted timing parameter). The processor 401 may select a timing parameter from a plurality of timing parameter candidates to determine the timing parameter. The plurality of timing parameter candidates may include possible T_{A} parameters associated with the established communication channel, or supported by the radio communication technology to be used for the uplink transmission (e.g. integer numbers between 0 and 63, or 0 and 3846).

Furthermore, the processor 401 may be configured to configure the timing of an uplink transmission via the established communication channel based on the determined timing parameter. The processor 401 may encode a message, to configure the timing of an uplink transmission to be performed by another communication device, for a transmission to the another communication device via the established communication channel (e.g. by sending a trigger or information indicating or representing the determined timing parameter) in accordance with various aspects of this disclosure. The processor 401 may schedule an uplink transmission of the device 400 based on the determined timing parameter by applying an advance based on the timing of the subframes. The processor 401 may schedule an uplink transmission via the transceiver 403 with an advance to the timing of the downlink subframes (or uplink subframes) associated with the established communication channel. The configuration of the timing of the uplink transmission may be applied to an uplink transmission associated with n-th slot or n-th subframe after the determination.

Various aspects herein may utilize one or more artificial learning / machine learning models (AI/ML) to obtain a timing parameter in accordance with various aspects of this disclosure. The term "model" used herein may be understood as any kind of algorithm, which provides output data based on input data provided to the model (e.g., any kind of algorithm generating or calculating output data based on input data).

The device 400 may implement the AI/ML. The device 400 may be a computing device or an apparatus suitable for implementing the AI/ML. The processor 401, or another processor as provided in this disclosure may implement the AI/ML. According to various aspects of this disclosure, other types of AI/ML implementations may include a further processor that may be internal or external to the processor (e.g.an accelerator, a graphics processing unit (GPU), a neuromorphic chip, etc.), or a memory may also implement the AI/ML. Furthermore, the device 400 may also access and use an external AI/ML which another computing device may implement (e.g. an edge computing device or a cloud computing device) according to various aspects of this disclosure. The AI/ML may be configured to provide output data based on input data and AI/ML parameters. The AI/ML may include a trained AI/ML, in which the AI/ML parameters are configured according to a training process for the purpose of obtaining a timing advance parameter based on received input data based on the channel information and the context information. A trained AI/ML may include an AI/ML which is trained prior to an inference to obtain output data. A trained AI/ML may further include an AI/ML which is trained based on the output data obtained via AI/ML (i.e. optimizations). In various aspects, AI/ML parameters include parameters configured to control how input data is transformed into output data. AI/ML parameters may further include hyperparameters configured to control how the AI/ML performs learning (e.g. learning rate, number of layers, etc.).

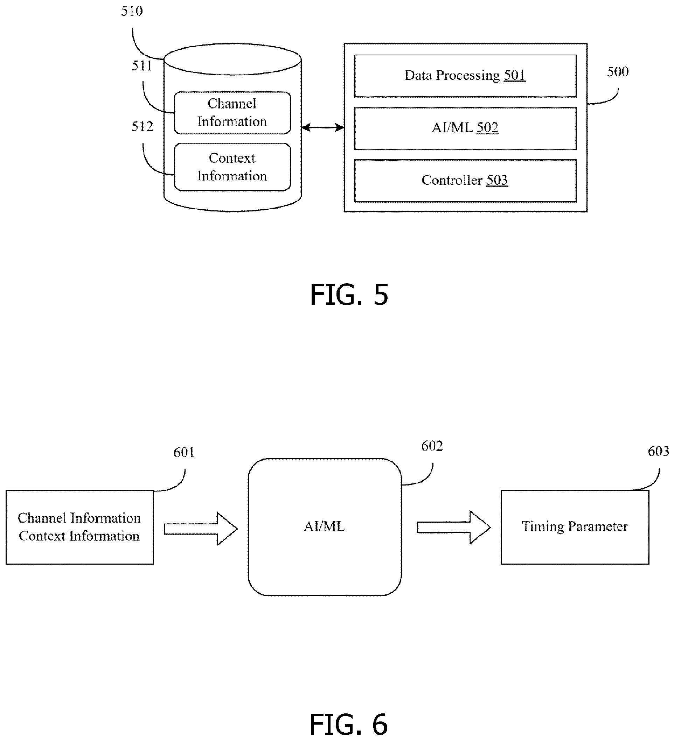

FIG. 5 shows an example of a processor and a memory of a device according to various aspects provided in this disclosure. The processor 500 is depicted to include various functional units that are configured to provide various functions as disclosed herein, associated with a processor (e.g. the processor 401) that may be used within a device (e.g. the device 400). The skilled person would recognize that the depicted functional units are provided to explain various operations that the processor 500 may be configured to perform. Similarly, the memory 510 is depicted to include the channel information 511 and the context information 512 as blocks, however, the memory may store the channel information 511 and the context information 512 in any kind of suitable configuration or mechanism. Furthermore, the AI/ML unit 502 is depicted as it is implemented in the processor 500 only as an example, and any type of AI/ML implementation which may include the implementation of the AI/ML in an external processor, such as an accelerator, a graphics processing unit (GPU), a neuromorphic chip, or in a cloud computing device, or in an external communication device may also be possible according to any methods.

The processor 500 may include a data processing module 501 that is configured to process the data and obtain at least a portion of the channel information 511 and/or the context information 512 as provided in various examples in this disclosure (e.g. via measurements, via reception) to be stored in the memory 510. In various examples, the channel information 511 and the context information 512 may include information for the past operations that the device has performed in the past for at least within a period of time in a plurality of instances of time (e.g. as a time-series data). The data processing module 501 may obtain a portion of the channel information 511 and the context information 512 according to the operations of the device. For example, the channel information 511 may include at least one measurement result (e.g. the latest measurement result) to be associated with the context information 512.

As an example, the data processing module 501 may track the measurements that a measurement circuit may perform and store the results of the measurements that are associated with the channel information 511 and the context information 512. Furthermore, the data processing module 501 may access information directly for a portion of context information 512 that is already stored in the memory 510 for operations of other entities. For example, the memory 510 may include already the location associated information related to the UE (e.g. location, velocity, mobility, etc.) for other operations, so the data processing module 501 may not obtain the same information to regard that particular information as the context information 512. The data processing module 501 may obtain the information to be used as the context information 512 based on exchanged messages between a BS and a UE. The data processing module 501 may obtain various information from messages received from the BS or from the UE. In various examples, the input data may further include a timing parameter associated with one or more previous timing parameters used to configure timing of uplink transmissions for one or more previous periods of time.

The context information 512 may include information with respect to a plurality of attributes about the device and activities of the device. The context information 512 may include information which the AI/ML 502 may use to obtain a timing parameter representing a propagation time associated with the established communication channel of which the channel information 511 represents various attributes of that may affect propagation conditions of the established communication channel.

For example, the context information 512 may include location information representing the location of the device. The device may obtain the location information via various known methods. In various examples, the context information 512 may include a velocity of the device, or a moving direction of the device. The moving direction of the device may include a moving direction relative to the another end of the established communication channel (e.g. BS). The location information may include a distance to the another end of the established communication channel. The context information may include information representing whether the device is at a fixed location or whether the device is moving. The context information may include terrain type associated with the location of the device.

The AI/ML unit 502 may implement an AI/ML. The AI/ML may be configured to receive input data with certain constraints, features, and formats. Accordingly, the data processing module 501 may obtain input data, that is based on the channel information 511 and the context information 512, to be provided to the AI/ML to obtain an output of the AI/ML representing a determined timing parameter. In various examples, the data processing module 501 may provide input data including the channel information 511 and the context information 512 to the AI/ML. The input data may include attributes of the channel information 511 and the context information 512 associated with a period of time or a plurality of consecutive periods of time. In various examples, the data processing module 501 may convert the channel information 511 and the context information 512 to an input format suitable for the AI/ML (e.g. input feature vectors) so that the AI/ML may process the channel information 511 and the context information 512. The processor 500 may further include a controller 503 to control the AI/ML module 502. The controller 503 may provide the input data to the AI/ML, or provide the AI/ML module 502 instructions to determine the timing parameter. The controller 503 may further be configured to perform further operations of the processor 500 or the device associated with the processor in accordance with various aspects of this disclosure, such as configuration of the timing of an uplink transmission.

The AI/ML may be any type of machine learning model configured to receive the input data and provide an output as provided in this disclosure. The AI/ML may include any type of machine learning model suitable for the purpose. The AI/ML may include a decision tree model or a rule-based model suitable for various aspects provided herein. The AI/ML may include a neural network. The neural network may be any type of artificial neural network. The neural network may include any number of layers, including an input layer to receive the input data, an output layer to provide the output data. A number of layers may be provided between the input layer and the output layer (e.g. hidden layers). The training of the neural network (e.g., adapting the layers of the neural network, adjusting AI/ML parameters) may use or may be based on any kind of training principle, such as backpropagation (e.g., using the backpropagation algorithm).

For example, the neural network may be a feed-forward neural network in which the information is transferred from lower layers of the neural network close to the input to higher layers of the neural network close to the output. Each layer may include neurons that receive input from a previous layer and provide an output to a next layer based on certain AI/ML (e.g. weights) parameters adjusting the input information.

The AI/ML may include a recurrent neural network in which neurons transfer the information in a configuration that the neurons may transfer the input information to a neuron of the same layer. Recurrent neural networks (RNNs) may help to identify patterns between a plurality of input sequences, and accordingly, RNNs may be used to identify, in particular, a temporal pattern provided with time-series data and perform estimations based on the identified temporal patterns. In various examples of RNNs, long short-term memory (LSTM) architecture may be implemented. The LSTM networks may be helpful to perform classifications, and processing, and estimations using time series data.

An LSTM network may include a network of LSTM cells that may process the attributes provided for an instance of time as input data, such as attributes provided for the instance of time, and one or more previous outputs of the LSTM that have taken in place in previous instances of time, and accordingly, obtain the output data. The number of the one or more previous inputs may be defined by a window size, and the weights associated with each previous input may be configured separately. The window size may be arranged according to the processing, memory, and time constraints and the input data. The LSTM network may process the features of the received raw data and determine a label for an attribute for each instance of time according to the features. The output data may include or represent a label associated with the input data.

In various examples, the neural network may be configured in top-down configuration in which a neuron of a layer provides output to a neuron of a lower layer, which may help to discriminate certain features of an input.

In accordance with various aspects, the AI/ML may include a reinforcement learning model. The reinforcement learning model may be modeled as a Markov decision process (MDP). The MDP may determine an action from an action set based on a previous observation which may be referred to as a state. In a next state, the MDP may determine a reward based on the current state that may be based on current observations and the previous observations associated with previous state. The determined action may influence the probability of the MDP to move into the next state. Accordingly, the MDP may obtain a function that maps the current state to an action to be determined with the purpose of maximizing the rewards. Accordingly, input data for a reinforcement learning model may include information representing a state, and an output data may include information representing an action.

The AI/ML may include a convolutional neural network (CNN), which is an example for feed-forward neural networks that may be used for the purpose of this disclosure, in which one or more of the hidden layers of the neural network include one or more convolutional layers that perform convolutions for their received input from a lower layer. The CNNs may be helpful for pattern recognition and classification operations. The CNN may further include pooling layers, fully connected layers, and normalization layers.

The AI/ML may include a generative neural network. The generative neural network may process input data in order to generate new sets, hence the output data may include new sets of data according to the purpose of the AI/ML. In various examples, the AI/ML may include a generative adversarial network (GAN) model in which a discrimination function is included with the generation function, and while the generation function may generate the data according to model parameters of the generation function and the input data, the discrimination function may distinguish the data generated by the generation function in terms of data distribution according to model parameters of the discrimination function. In accordance with various aspects of this disclosure, a GAN may include a deconvolutional neural network for the generation function and a CNN for the discrimination function.

The AI/ML may include a trained AI/ML that is configured to provide the output as provided in various examples in this disclosure based on the input data. The trained AI/ML may be obtained via an online and/or offline training. The training includes adjusting the machine learning model parameters stored in the memory. For the offline training, a training agent may train the AI/ML based on conditions of the device including the constraints of the device, category of the device, device capabilities, etc. at a past instance of time. Furthermore, the training agent may train the AI/ML using online training methods based on the latest (or actual) implementation conditions, such as the location of the device, etc. Furthermore, the processor may further optimize the AI/ML based on previous inference results, and possibly based on a performance metric with respect to the previous inference results and the effects obtained in response to the previous inference results.

The AI/ML may include a trained AI/ML that is configured to provide the output as provided in various examples in this disclosure based on the input data and one or more AI/ML parameters obtained by the training. The trained AI/ML may be obtained via an online and/or offline training. With respect to the offline training, a training agent may train the AI/ML based on conditions of a communication device configured to communicate using mobile radio communication technologies, in particular the communication technology that is to be used to communicate via the established communication channel, and attributes associated with the established communication channel in a past instance of time. Furthermore, a training agent may train the AI/ML using online training methods based on the latest (or actual) implementation conditions, such as location of the communication device, previous or further, weather conditions or other conditions that may affect the propagation delay. Furthermore, the AI/ML may further optimize the AI/ML based on its inference results, and possibly based on a performance metric with respect to the inference results and the effects obtained in response to the inference results. A training agent may perform various operations with respect to the training at various aspects, including online training, offline training, and optimizations based on the inference results. The AI/ML may take any suitable form or utilize any suitable technique for training process. For example, the AI/ML may be trained using supervised learning, semi-supervised learning, unsupervised learning, or reinforcement learning techniques.

In supervised learning, the AI/ML may be obtained using a training set of data including both inputs and corresponding desired outputs (illustratively, input data may be associated with a desired or expected output for that input data). Each training instance may include one or more input data item and a desired output. The training agent may train the AI/ML based on iterations through training instances and using an objective function to teach the AI/ML to estimate the output for new inputs (illustratively, for inputs not included in the training set). In semi-supervised learning, a portion of the inputs in the training set may be missing the respective desired outputs (e.g., one or more inputs may not be associated with any desired or expected output).

In unsupervised learning, the model may be built from a training set of data including only inputs and no desired outputs. The unsupervised model may be used to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive feedback (also referred to as reward) or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

The training agent may adjust the AI/ML parameters of the respective model based on outputs and inputs (i.e. output data and input data). The training agent may train the AI/ML according to desired outcome. The training agent may provide the training data to the AI/ML to train the AI/ML. In various examples, the processor and/or the AI/ML unit itself may include the training agent, or another entity that may be communicatively coupled to the processor may include the training agent and provide the training data to the device, so that the processor may train the AI/ML.

In various examples, the device may include the AI/ML in a configuration that it is already trained (e.g. the AI/ML parameters in a memory are already set for the purpose). It may desirable for the AI/ML itself to have the training agent, or a portion of the training agent, in order to perform optimizations according to the output of inferences as provided in this disclosure. The AI/ML may include an execution unit and a training unit that may implement the training agent as provided in this disclosure for other examples. In accordance with various examples, the training agent may train the AI/ML based on a simulated environment that is controlled by the training agent according to similar considerations and constraints of the deployment environment.

In accordance with various aspects of this disclosure, For example, the training input data may include, or may be based on, training channel information generated or obtained to represent various attributes of radio communication channels (e.g. measurements, path loss parameters, various metrics representing the channel) and training context information generated or obtained to represent various attributes related to a location of a communication device that is a link of the respective radio communication channel, as provided in this disclosure. Each training input data item may include channel information associated with an established communication channel of a communication device for an instance of a period of time, and context information of the communication device for the same instance of or the period of time. Training input data may further include training output data associated with the training input data representing desired outcomes with respect to each set of training input data. Training output data may indicate, or may represent, the desired outcome with respect to training input data, so that the training agent may provide necessary adjustments to respective AI/ML parameters in consideration with the desired outcome.

In various scenarios with respect to the training, an external agent (e.g. operator, user, etc.) may externally provide desired outcomes for training input data via an interface. In accordance with various aspects, the training output data may include a timing parameter associated with the same instance of or the period of time, so that the training agent may adjust AI/ML model parameter based on a timing parameter determined by the AI/ML and the timing parameter included in the training input data item.

The training agent may collect the training input data (and the training output data) from operation of other devices (e.g. BS) associated with radio access network and provision of timing advance commands. The collected data may include timing parameters determined by other devices (via any known methods) and channel information and context information that are associated with the timing parameters. The collected data may further include a performance metric associated with the determined timing parameters by other devices. The collected data may include time information (e.g. timestamp) that is associated with the provided information.

A training agent may train the AI/ML by providing training input data to the input of the AI/ML and it may adjust AI/ML parameters of the AI/ML based on the output of the AI/ML and training output data associated with the provided training input data with an intention to make the output of the AI/ML more accurate. Accordingly, the training agent may adjust one or more AI/ML parameters based on a calculation including parameters for the output of the AI/ML for the training input data and the training output data associated with the training input data. In various examples, the calculation may also include one or more parameters of the AI/ML. With each iteration with respect to the training input data that may include many data items, which each data item may represent an input of an instance (of time, of observation, etc.) on various aspects and each iteration may iterate a respective data item representing an input of an instance, the training agent may accordingly cause the AI/ML to provide more accurate output through adjustments made in the AI/ML parameters.

The processor 500 may implement the training agent, or another entity that may be communicatively coupled to the processor 500 may include the training agent and provide the training input data to the device, so that the processor 500 may train the AI/ML. In various examples, the device may include the AI/ML in a configuration that it is already trained (e.g. the machine model parameters in the memory are set). It may desirable for the AI/ML itself to have the training agent, or a portion of the training agent, in order to perform optimizations according to the output of the inferences to be performed as provided in this disclosure. The AI/ML may include an execution unit and a training unit that may implement the training agent as provided in this disclosure for other examples.

Furthermore, the controller 503 may control the AI/ML module 502 according to a predefined event. For example, the controller 503 may provide instructions to the AI/ML module 502 to perform the AI/ML between actual measurements associated with the established communication channel. For example, the device may be configured to perform channel measurements. Accordingly, the device may be configured to perform a first measurement to obtain a first channel information at a first instance of time and a first context information related to the first instance of time, and the device may be configured to perform a second measurement to obtain a second channel information at a second instance of time. The controller 503 may control the AI/ML unit 502 to determine a timing parameter at a third instance of time between the first instance of time and the second instance of time. In accordance with various aspects of this disclosure, the controller 503 may control the transceiver to perform the measurements and/or the AI/ML unit 502 to perform an inference, to receive the output including the timing parameter based on a predefined period, e.g. for each X ms.

FIG. 6 shows an example of an AI/ML. The AI/ML 602 may be configured to receive input data 601 that is based on channel information and context information, as provided in various aspects of this disclosure. The input data 601 may include the channel information and the context information. The input data 601 may include information that is based on the channel information and the context information and transformed into a format that is suitable for the AI/ML 602 to receive the input data 601, such as input feature vectors associated for attributes of the channel information and the context information.

For example, the channel information may include IQ samples obtained based on radio communication signals received via an established communication channel of which a communication device is one of the links of the communication channel. Alternatively, or additionally, the channel information may include frequency domain components of the received radio communication signals. In an example, the context information may include a terrain type associated with the location of the communication device, a location or a distance of the communication device to another link of the established communication channel (e.g. BS), a speed, velocity, and/or a heading associated with the communication device.

The AI/ML 602 may be configured provide an output 603 that is indicative or representative of a timing parameter. The timing parameter includes a timing parameter to be used by the communication device to perform an uplink transmission via the established communication channel to the another link of the established communication channel. The timing parameter may include, or may indicate, or may represent, any one of T_{TA}, N_{TA}, (N_{TA}+N_{TA,offset}), or T_{A}. The timing parameter may represent a timing parameter determined for an uplink transmission to be performed for a future instance of time (i.e. a predicted timing parameter). The AI/ML 602 may be configured to provide the output data by mapping the input data to a plurality of timing parameter candidates. The plurality of timing parameter candidates may include possible T_{A} parameters associated with the established communication channel, or supported by the radio communication technology to be used for the uplink transmission (e.g. integer numbers between 0 and 63, or 0 and 3846).

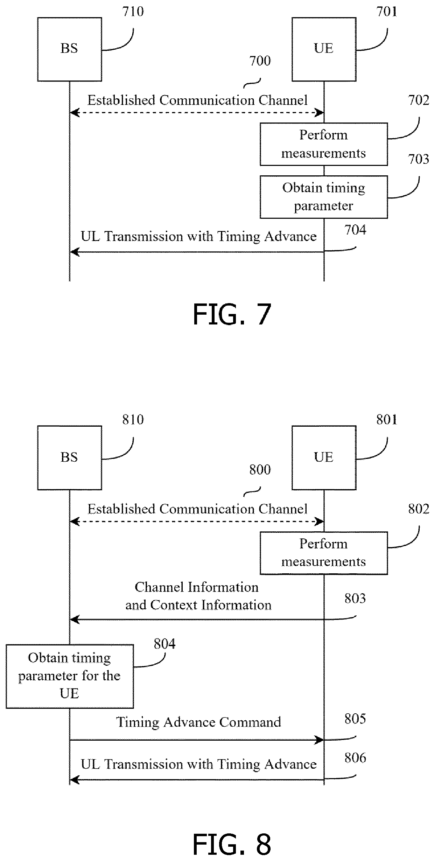

FIG. 7 shows an example of uplink transmission timing procedure between a base station and a UE. In this example, the UE 701 may include the device (e.g. the device 400) as provided in this disclosure. The UE 701 and the BS 710 may be configured to communicate with each other via an established communication channel 700. The UE 701 may have received radio communication signals from the BS 710 designating timing of subframes to communicate with the BS 710. The length of each subframe may depend on the radio communication technology. For example, in 5G NR the length of subframe is 1 ms including a plurality of frequency resources and a plurality of time resources, and each resource of a designated frequency resource and a time resource correspond to a resource element. The number of frequency and time resources per subframe may depend on the numerology (indicating, or representing, subcarrier spacing/OFDM symbol duration) designated for the respective communication. Accordingly, the UE 701 may communicate with the BS 710 in designated subframes.

The UE 701 may perform measurements 702 based on radio communication signals received from the BS 710 to obtain channel information. According to various aspects, the measurements may include IQ samples and/or frequency domain components of received radio communication signals. The received radio communication signals may include reference signals. In 5G NR, the UE 701 may perform measurements 702 in downlink direction based on at least one of a received synchronization signal block (SSB), a received demodulation reference signal (DMRS), and/or a channel state information reference signal (CSI-RS). The UE 701 may be configured to obtain at least one of a received signal strength indication (RSSI), a reference signal reference power (RSRP), a reference signal received quality (RSRQ), and/or a signal to interference ratio (SINR) measurement for the received radio communication signal. In one example, the UE 701 may further obtain measurements of the BS 710 via exchange of messages (e.g. via a sounding reference signal (SRS) in uplink direction) for the channel information. Once the UE 701 has obtained information related to measurements, the UE 701 may generate the channel information indicating or representing attributes associated with the established communication channel 702.

The UE 701 may also obtain context information using various methods provided in this disclosure, such as via measurements made to obtain information associated with the location, and/or speed, and/or heading, etc. of the UE 701 and/or position of the UE 701 with GNSS systems. The UE 701 may further obtain the context information associated with the location of the UE 701 by performing queries to the network (e.g. to obtain terrain type using the location information from Internet).

In this illustrative example, the UE 701 may implement the AI/ML to obtain 703 the timing parameter to be used for uplink transmission to the BS 710. Accordingly, communication overhead caused by the communication of timing advance to be applied by the UE 701 for the established communication channel 702 may be reduced. The BS 710 may still send timing advance commands to the UE 701 but with a lower periodicity. In such example, the BS 710 may still send timing advance commands to the UE 701 for a time period with a first periodicity to configure the timing at least one uplink transmission of the UE 701 for a first period of time. The UE 701 may further determine timing parameters to configure the timing of at least one uplink transmission of the UE 701 for a second period of time.

Based on the obtained timing parameter, the UE 701 may configure timing of an uplink transmission to be transmitted to the BS 710. The configuration of the timing of the uplink transmission may include applying a timing advance to subframe timing based on the obtained timing parameter to start the uplink transmission with the timing advance T_{TA}=(N_{TA} + N_{TA,offset})^{∗}T_{c} before the start of the corresponding subframe (e.g. downlink subframe) at the UE 701. Accordingly, the UE 701 may start 704 transmitting the radio communication signals to the BS 710 before a time period that is based on the obtained timing parameter than the instance of time of the scheduled subframe.

FIG. 8 shows an example of uplink transmission timing procedure between a base station and a UE. In this example, the BS 810 may include the device (e.g. the device 400) as provided in this disclosure. The UE 801 and the BS 810 may be configured to communicate with each other via an established communication channel 800. The UE 801 may have received radio communication signals from the BS 810 designating the timing of subframes to communicate with the BS 810. The length of each subframe may depend on the radio communication technology. For example, in 5G NR the length of subframe is 1 ms including a plurality of frequency resources and a plurality of time resources, and each resource of a designated frequency resource and a time resource correspond to a resource element. The number of frequency and time resources per subframe may depend on the numerology (indicating, or representing, subcarrier spacing/OFDM symbol duration) designated for the respective communication. Accordingly, the UE 801 may communicate with the BS 810 in designated subframes.

The UE 801 may perform measurements 803 based on radio communication signals received from the BS 810 to obtain channel information. According to various aspects, the measurements may include IQ samples and/or frequency domain components of received radio communication signals. The received radio communication signals may include reference signals. In 5G NR, the UE 801 may perform measurements 803 in downlink direction based on at least one of a received synchronization signal block (SSB), a received demodulation reference signal (DMRS) and/or a channel state information reference signal (CSI-RS). The UE 801 may be configured to obtain at least one of a received signal strength indication (RSSI), a reference signal reference power (RSRP), a reference signal received quality (RSRQ), and/or a signal to interference ratio (SINR) measurement for the received radio communication signal.

The UE 801 may also obtain context information using various methods provided in this disclosure, such as via measurements made to obtain information associated with the location, and/or speed, and/or heading, etc. of the UE 801 and/or position of the UE 801 with GNSS systems. The UE 801 may further obtain the context information associated with the location of the UE 801 by performing queries to the network (e.g. to obtain terrain type using the location information from Internet).

The UE 801 may encode one or more messages indicating or representing the channel information and the context information to be transmitted to the BS 810. In accordance with various aspects of this disclosure, the UE 801 may encode the messages to be transmitted to the BS 810 using the MDT mechanism to report its measurements indicating, or representing, the channel information and the context information. The BS 810 may accordingly receive and obtain 803 the channel information and the context information of the UE 801, which the BS 810 may use to determine a timing parameter for an uplink transmission of the UE 801 to the BS 810.

In one example, the BS 810 may further obtain measurements based on received radio communication signals from the UE 801 to obtain the channel information. In this example, the BS 810 may obtain measurements based on reference signals received from the UE 801 (e.g. sounding reference signal (SRS) in uplink direction) to obtain the channel information. In such an example, the UE 801 may only send the context information, and the BS 810 may use the context information received from the UE 801 and the channel information including the measurements made by the BS 810 to obtain the timing parameter.

In this illustrative example, the UE 801 may implement the AI/ML to obtain 804 the timing parameter to be used for uplink transmission to the BS 810. Accordingly, the timing advance to be applied by the UE 801 for the established communication channel 802 may consider further parameters that may affect the propagation conditions, and accordingly, the number of communications, that may be required to reconfigure the timing advance of the UE 801, may be reduced.

The BS 810 may encode a timing advance command, that is based on the obtained timing parameter as provided in this disclosure, to configure timing of an uplink transmission of the UE 801. In accordance with various aspects, the BS 810 may encode the timing advance command via a RAR response or a MAC-CE. The UE 801 may receive 805 the timing advance command, and in response to the timing advance command, that is based on the obtained timing parameter, the UE 801 may configure timing of the uplink transmission to be transmitted to the BS 810. The configuration of the timing of the uplink transmission may include applying a timing advance to subframe timing based on the obtain timing parameter to start the uplink transmission with the timing advance T_{TA}=(N_{TA} + N_{TA,offset})^{∗}T_{c} before the start of the corresponding subframe (e.g. downlink subframe) at the UE 801. Accordingly, the UE 801 may start 806 transmitting the radio communication signals to the BS 810 before a time period that is based on the obtained timing parameter than the instance of time of the scheduled subframe.

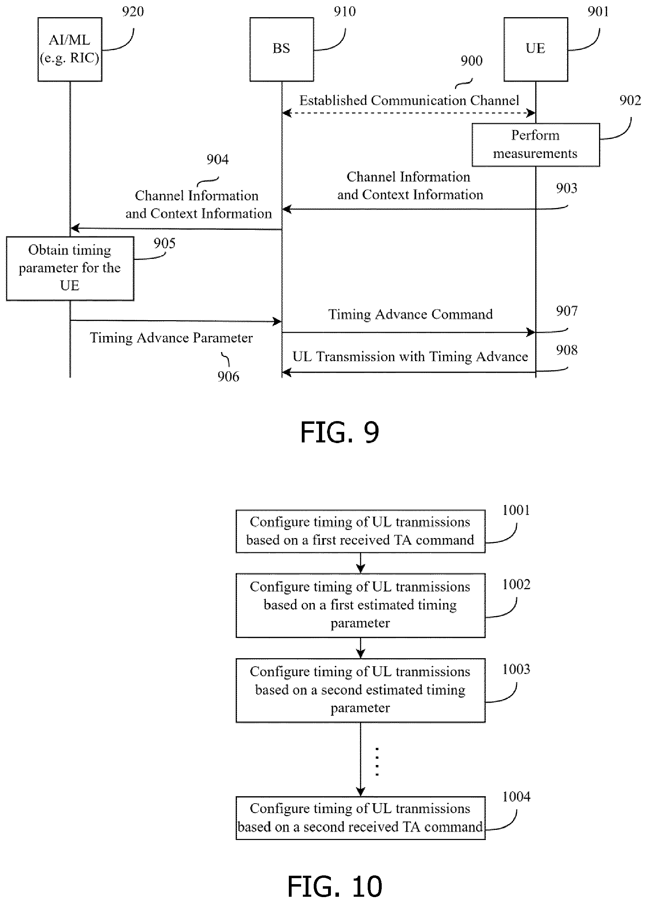

FIG. 9 shows an example of uplink transmission timing procedure between a base station, a UE, and another entity implementing the AI/ML, which is to be referred as AI/ML entity 920 in this illustrative example. The AI/ML entity 920 may be a computing device. The AI/ML entity 920 may be an intelligent controller (e.g. an RIC, a non-RT RIC, a near-RT RIC). In this example, communication network includes the AI/ML entity 920 that is communicatively coupled to the BS 910, and the AI/ML entity 920 may include the device (e.g. the device 400) as provided in this disclosure. The UE 901 and the BS 910 may be configured to communicate with each other via an established communication channel 900, as provided in various aspects in this disclosure.

The UE 901 may perform measurements 903 based on radio communication signals received from the BS 910 to obtain channel information. The UE 901 may also obtain context information using various methods provided in this disclosure. The UE 901 may encode one or more messages indicating, or representing, the channel information and the context information to be transmitted to the BS 910. In accordance with various aspects of this disclosure, the UE 901 may encode the messages to be transmitted to the BS 910 using the MDT mechanism to report its measurements indicating, or representing, the channel information and the context information. The BS 910 may accordingly receive and obtain 903 the channel information and the context information of the UE 901. The BS 910 may communicate 904 with the AI/ML entity 920 to send information representing the channel information and the context information or the BS 910 may send input data that is based on the channel information and the context information, that is to be used by an AI/ML to obtain a timing parameter as provided in this disclosure. In one example, the channel information provided by BS 910 may include channel information that is based on received radio communication signals from the UE 901 (e.g. sounding reference signal (SRS) in uplink direction).

In this illustrative example, the AI/ML entity 920 may implement the AI/ML to obtain 905 the timing parameter to be used by the UE 901 for an uplink transmission to the BS 910. Accordingly, the timing advance to be applied by the UE 901 for the established communication channel 902 may consider further parameters that may affect the propagation conditions, and accordingly, the number of communications, that may be required to reconfigure the timing advance of the UE 901, may be reduced. The AI/ML entity 920 may encode a message including the obtained timing parameter to configure the uplink transmission of the UE 901. The BS 910 may receive 906 the obtained timing parameter and encode a timing advance command, that is based on the obtained timing parameter as provided in this disclosure, to configure the timing of an uplink transmission of the UE 901. In accordance with various aspects, the BS 810 may encode the timing advance command via a RAR response or a MAC-CE. The UE 901 may receive 907 the timing advance command, and in response to the timing advance command, that is based on the obtained timing parameter, the UE 901 may configure the timing of the uplink transmission to be transmitted to the BS 910. The configuration of the timing of the uplink transmission may include to apply a timing advance to subframe timing based on the obtain timing parameter to start the uplink transmission with the timing advance T_{TA}=(N_{TA} + N_{TA,offset})^{∗}T_{c} before the start of the corresponding subframe (e.g. downlink subframe) at the UE 901. Accordingly, the UE 901 may start 908 transmitting the radio communication signals to the BS 910 before a time period that is based on the obtained timing parameter than the instance of time of the corresponding subframe.

FIG. 10 shows an example of a reconfiguration of timing of uplink transmissions of a UE. The illustrative example intends to provide information for reconfiguration procedure of timing advance to be used by the UE at a plurality of instances of time, in particular to provide interoperability with existing timing advance configurations provided by 5G NR, or to provide interoperability with another model that is configured to output timing parameters indicating, or representing, the timing advance to be used by the UE. The illustrative example will be explained with a scenario in which the UE includes the device according to various aspects of this disclosure. The skilled person would recognize that the operations associated with this illustrative example may also be realized in a scenario in which the BS or the AI/ML entity includes the device, in particular with FIGs 7-9.

In this example, the UE may be configured to receive timing advance commands from the BS to configure uplink transmissions to the BS for a first period of time, in which the UE configures timing advance based on received timing advance commands for uplink transmissions to be transmitted to the BS within the first period of time. The UE may further be configured to determine timing parameters as provided in this disclosure based on the channel information and the context information of the UE, and the UE may configure timing advance of uplink transmissions based on the determined timing parameters for uplink transmissions to be transmitted to the BS for one or more second periods of time, in which the UE configures the timing advance based on the determined timing advance parameters within the one or more second periods of time. For example, the AI/ML, that is used to determine the timing parameter, may be configured to provide output indicating, or representing, the timing parameter based on the input data including, or based on, the context information, the channel information, and at least the latest received timing advance command.

In other words, the UE may configure timing of uplink transmissions based on a first received timing advance command 1001 for a first period of time. Then, the UE may configure timing of uplink transmissions based on a first estimated parameter 1002 for a second period of time. The UE may then configure timing of uplink transmissions based on a second estimated parameter 1002 for a third of period time. The UE may configure timing of uplink transmissions based on further estimated parameters, until the UE receives a second timing advance command. In response to receiving a second timing advance command, the UE may configure timing of uplink transmissions based on the second received timing advance command 1004 for a n-th period of time.

The UE may configure timing of uplink transmissions based on estimated parameters periodically, and each estimated parameter to be applied for a predefined period of time. The UE may be further configured to configure timing of uplink transmissions based on received timing advance commands for a predefined or predetermined period of time. The UE may obtain information indicating, or representing, the amount of the predefined or predetermined period of time from a received timing advance command.

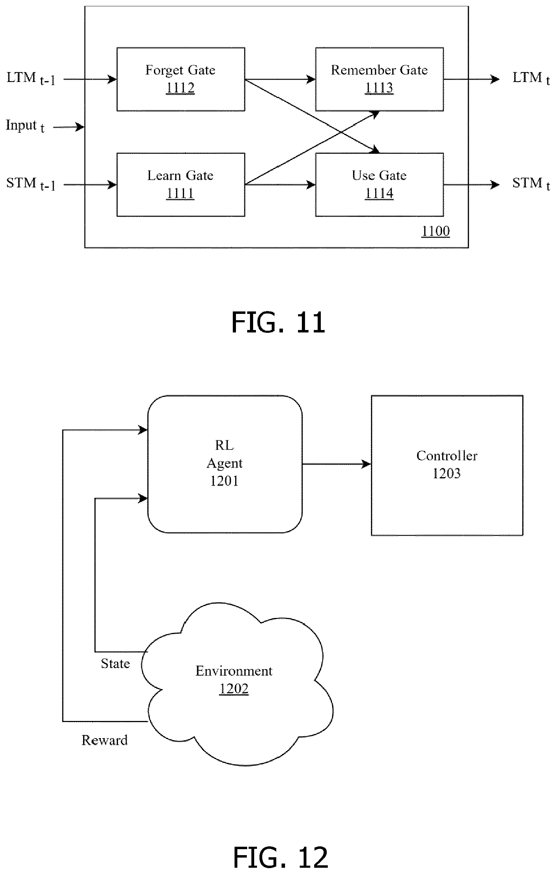

FIG. 11 shows an exemplary representation of the architecture of an LSTM. An LSTM network may include a network of LSTM cells that may process the attributes provided for an instance of time from the input according to the attributes provided for the instance of time and one or more previous outputs of the LSTM that have taken in place in previous instances of time, and accordingly, obtain the output. The number of the one or more previous inputs may be defined by a window size associated with the LSTM network. The architecture of an LSTM 1100 may be represented by various gates that are configured to perform various functions as defined here.

An LSTM 1100 may include a learn gate 1111, a forget gate 1112, a remember gate 1113, and a use gate 1114. An LSTM 1100 may receive inputs including Long Term Memory (LTM) information of a previous instance of time (LTMₜ₋₁) and Short-Term Memory (STM) information of a previous instance of time (STMt-i) to perform calculations based on input features (Inputₜ) associated with current instance of time. Based on the calculations, the LSTM 1100 may provide output including LTM information of a current instance of time (LTMt) and STM information of a current instance of time (STMt). With various aspects provided herein, a data processing module (e.g. the data processing module 501) may obtain input features associated with the current instance of time based on channel information and context information.

In various examples, the input features may include an input vector representing the channel information and the context information. Each element of the input vector (each input feature) may correspond to an information item of the channel information (e.g. an IQ sample, or an RSSI, or an RSRP, or etc.) or the context information (e.g. a mobility information, a distance, a location, a terrain type, etc.). Accordingly, in accordance with various aspects provided herein, STMₜ₋₁ may include a timing parameter determined for a previous instance of time, STMₜ may include the timing parameter that is determined based on the channel information and the context information provided with Inputₜ.

The learn gate 1111 may be configured to combine the input features with the STMₜ₋₁ based on weight parameters associated for learning. For this purpose, the LSTM 1100 may concatenate the STMₜ₋₁ with input vector I in a matrix L=[STMₜ₋₁, Iₜ] and multiply the matrix with a weight matrix W_{L} and add a bias parameters b_{L} associated for learning and provide the outcome to a hyperbolic tangent function for the purpose of introducing nonlinearity to a learn matrix Nt = tanh (W_{L}^{∗}L+b_{L}). The learn gate 1111 may also be configured to provide an ignore function to ignore insignificant information. For this purpose, LSTM 1100 may obtain an ignore factor iₜ=σ(Wᵢ^{∗}L+bᵢ), where Wᵢ is weight matrix associated for ignoring and bᵢ are bias matrix associated for ignoring, and σ is an activation function (Sigmoid). The result of the learn gate 1111 may then be Nₜ^{∗}iₜ.

The forget gate 1112 may be configured to determine which information provided by LTMₜ₋₁ is to be maintained. For this purpose, the LSTM 1100 may calculate a forget factor fₜ based on the matrix L and a weight matrix W_{f} associated for forgetting with operation fₜ=WₜL+bₜ. The LSTM 1100 may then multiply the forget factor fₜ with LTMₜ₋₁ to obtain the result of the learn gate 1111 LTMₜ₋₁^{∗}fₜ.

The remember gate 1113 may be configured to combine the input features with STMₜ₋₁ to provide a remembering function. For this purpose, the output of the forget gate 1112 and the learn gate 1113 are added together to obtain LTMt.. Accordingly, LTMₜ=LTMₜ₋₁^{∗}fₜ +Nₜ^{∗}iₜ. The use gate may 1114 may be configured to combine important information from LTMₜ₋₁ with STMₜ₋₁ to obtain STMₜ for next cell and produce output for the Inputₜ . For this purpose, the LSTM 1100 may pass LTMₜ₋₁ through tangent activation function (tanh) with some bias to produce Ut=tanh(Wu LTMₜ₋₁+bᵤ), wherein Wᵤ and bᵤ include weight and bias parameters associated for use of LTMₜ₋₁. The LSTM 1100 may pass the matrix L through a sigmoid activation function with some bias to produce Vt = σ(Wᵥ^{∗}L+bᵥ), wherein Wᵥ and bᵥ include weight and bias parameters associated for use of STMₜ₋₁. The output of the use gate 1114 may include the multiplication of the calculations, STMₜ= Uₜ^{∗}Vₜ.

Accordingly, the LSTM 1100 may provide an output representing the determined timing parameter. The skilled person would understand that the machine model parameters with respect to the LSTM (e.g. W_{L},Wᵢ,W_{f}, Wᵤ, Wᵥ) and bias parameters are to be selected to give the desired performance. The selection of these parameters may include heuristic approach to avoid exploding gradient issues and convergence.

FIG. 12 shows an exemplary representation of a reinforcement learning model based AI/ML. A reinforcement learning agent (RL agent) 1201 may determine an action based on a first observation (i.e. state) made for the observation environment 1202 represents at a first instance of time and a reward provided for the first instance of time with respect to a transition from a previous instance of time to the first instance of time, that is represented by the first observation. For example, the RL agent 1201 may determine the action which may include a selection of a timing parameter from a plurality of timing parameter candidates. The RL agent 1201 may, based on the first observation, map the state represented with the first observation to one of the timing parameter candidates that maximizes the reward according to the estimation of the RL agent 1201. Accordingly, the RL agent 1201 may output the selected timing parameter to a controller 1203 (e.g. the controller 503) which then provides an output to configure the communication device that is going to use the timing parameter to provide timing advance. The controller 1203 may accordingly provide timing advance based on the selected timing parameter or encode information representing the selected timing parameter to be transmitted to the communication device.

In one example, the reinforcement learning model may be based on Q-learning to provide the output in the particular state represented by the input according to a Q-function based on AI/ML parameters. The Q-function may be represented with an equation: Q_{new} (st, at) ← (1-α) Q(st,at) + α (r + γ maxa(Q(st+i,a)) such that, s representing the state (observation) and a representing a selected timing parameter, representing all state-action pairs (observation-timing parameter pairs) with an index t, the new Q value of the corresponding state-action pair t is based on the old Q value for the state-action pair t and the sum of the reward r obtained by selecting the timing parameter at in the state sₜ with a discount rate γ that is between 0 and 1, in which the weight between the old Q value and the reward portion is determined by the learning rate α.

The discount factor may determine the importance of future rewards. A discount factor of 0 can make the agent "myopic" (or short-sighted) by only considering current rewards, while a factor close to 1 can make the agent strive for a long-term high reward. If the discount factor meets or exceeds 1, the action values may diverge, γ=1, all environment histories can become infinitely long, and utilities with additive, undiscounted rewards generally become infinite. Even with a discount factor only slightly lower than 1, Q-function learning leads to propagation of errors and instabilities when the value function is approximated with an artificial neural network. In that case, starting with a lower discount factor and increasing the discount value towards a final value may accelerate the learning.

In relation with classification associated with selecting the timing parameter using Q-learning the reward may be near perfect timing alignment. That may include, lowest inter symbol interference, lowest timing mismatch between UL and DL frames at the BS. One way of implementing Q-learning may include using Q-tables. The RL-agent 1201 may use a Q table with initial values as 0s or any other value. The states may include the channel information (e.g. RF channel condition= and context information. For example, condition-n may correspond to 10-20 dBm RSRP, whether the UE is stationary or mobile, and whether the UE is located indoor or outdoor. During the training, Q table is updated with appropriate values. During the inferencing phase the timing parameters are inferred from the Q-table.

In accordance with various aspects provided herein, observations may include the channel information and the context information as provided in this disclosure. Further, the observations may include an alignment parameter provided by a BS based on alignment of an uplink transmission(s) that is transmitted by a UE to the BS with the selected timing parameter to a subframe of the BS. The alignment parameter may represent an idle time representing the period of time which the BS did not receive any radio communication signals from the UE within the period defined by the subframe, or an occupied time representing the period of time which the BS has received radio communication signals from the UE within the period defined by the subframe. Observations may further include inter-symbol interference parameters provided by the BS based on an uplink transmission(s) that is transmitted by the UE to the BS with the selected timing parameter, representing detected inter-symbol interference associated with the uplink transmission(s). Observations may further include a mismatch parameter provided by the BS, the mismatch parameter representing the timing mismatch between UL subframes and DL frames at the BS. Observations may further include a number of retransmissions, or a number of radio link failures, associated with the uplink transmission(s). In examples, where the RL agent 1201 is implemented in an entity other than the BS (e.g. UE, another entity in radio access network), the BS may send the parameters associated with the observation .

The RL agent 1201 may accordingly, based on the observations representing a state after uplink transmission(s) with selected timing parameters, update expected rewards (e.g. update a reward function, or update Q-table) for learning. Furthermore, based on the observations representing the state, the RL agent 1201 may select the timing parameter that maximizes the reward expected from the selected timing parameter based on the reward function or Q-table. In various examples, the rewards may be calculated based on the disclosed herein observations using the reward function. In accordance with various aspects the RL agent 1201 may select the timing parameter from the candidate timing parameters using Q-tables. Q-tables may include information representing an expected reward for each timing parameter candidate that can be selected according to the state represented by the observations.

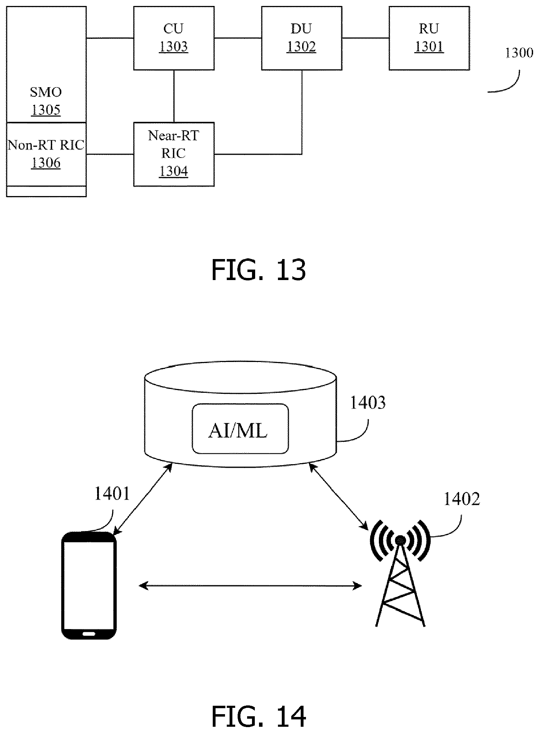

FIG. 13 shows an exemplary radio access network architecture in which the radio access network is disaggregated in multiple units. In LTE or 5G NR, network access nodes, such as a BS may implement the whole network stack including physical layer (PHY), media access control (MAC), radio link control (RLC), packet data convergence control (PDCP), and radio resource control (RRC) functions of the network stack. In a distributed approach of radio access networks, the processing of the network stack is disaggregated into at least two units (e.g. into RU, DU, and CU). Although the example illustrates a distributed structure that is based on open-RAN (O-RAN) architecture, the skilled person is able to populate the teaching provided herein in other types of distributed architectures, such as baseband unit (BBU) that may operate in the cloud and may be split to a Control Unit (CU) according to Rel.15 of 3GPP standards.

In various deployments in recently emerged RAN architectures, such as Open Radio Access Network (O-RAN) architectures, network access nodes may have functionalities that are split among multiple units with an intention to meet the demands of increased capacity requirements by providing a flexible and interoperable approach for RANs. The exemplary RAN 1300 provided herein includes a radio unit (RU) 1301, a distributed unit (DU) 1302, a central unit (CU) 1303, a near-RT RAN intelligent controller (near RT-RIC) 1304, and a service management and orchestration framework (SMO) 1305 including a non-RT RIC 1306.

There are many approaches to provide the split among the multiple units. In this illustrative example, the CU 1303 (e.g. O-CU) may be mainly responsible for non-real time operations hosting the radio resource control (RRC), the PDCP protocol, and the service data adaptation protocol (SDAP). The DU (e.g. O-DU) 1302 may be mainly responsible for real-time operations hosting, for example, RLC layer functions, MAC layer functions, and Higher-PHY functions. RUs 1301 (e.g. O-RU) may be mainly responsible for hosting the Lower-PHY functions to transmit and receive radio communication signals to/from terminal devices (e.g. UEs) and provide data streams to the DU over a fronthaul interface (e.g. open fronthaul). The SMO 1305 may provide functions to manage domains such as RAN management, Core management, Transport management, and the non-RT RIC 1306 may provide functions to support intelligent RAN optimization via policy-based guidance, AI/ML model management, etc. The near-RT RIC 1304 may provide functions for real time optimizations, including hosting one or more xApps that may collect real-time information (per UE or per Cell) and provide services, that may include AI/ML services as well

The exemplary RAN 1300 is illustrated for the purpose of brevity. The skilled person would recognize the aspects provided herein and may also realize that the exemplary RAN 1300 may include further characterizations, such as the CU may also be -at least logically- distributed into two entities (e.g. CU-Control Plane, CU-User Plane), there may be various types of interfaces between different entities of the exemplary RAN 1300 (e.g. E2, F1, O1, X2, NG-u, etc.).

In accordance with the exemplary distributed RAN architecture, a UE may transmit radio communication signals to the RU 1301 and receive radio communication signals from the RU 1301. The processing associated with the communication is performed at the respective layers of the network stack by respective entities that are responsible to perform corresponding function of the respective layers.

In accordance with various aspects of this disclosure and this exemplary RAN 1300, aspects associated with configuration of timing of an uplink transmission of a UE using an established communication channel based on the determined timing parameter may be performed by MAC layer functions within the DU 1302. Accordingly, the DU 1302 may include aspects of a device (e.g. the device 400) provided herein, that is configured to determine a timing parameter for a transmission within the communication channel that is established between the RU 1301 and a UE, as provided in this disclosure. In such an example, DU 1302 may receive the channel information and the context information of the respective UE that is configured to transmit radio communication signals to the RU 1301 over the established communication channel. The DU 1302 may receive the channel information and the context information of the respective UE over the RU 1301. The DU 1302 may determine a timing parameter for the respective UE based on the channel information and the context information of the respective UE, and perform MAC layer functions to configure timing of an uplink transmission of the respective UE by issuing a timing advance command to be sent to the respective UE over the RU 1301. In various examples, the CU 1303 may also include aspects of the device (e.g. the device 400) in a manner that is similar to the scenario in which the DU 1302 includes the device (e.g. the device 400).

In accordance with various aspects of this disclosure and this exemplary RAN 1300, aspects associated with determination of timing parameter to be used to configure timing of an uplink transmission of a UE using an established communication channel may be performed by functions of the near-RT RIC 1304. Accordingly, the near-RT RIC may include aspects of a device (e.g. the device 400) provided herein, that is configured to determine a timing parameter for a transmission within the communication channel that is established between the RU 1301 and a UE, as provided in this disclosure. In such an example, near-RT RIC 1304 may receive the channel information and the context information of the respective UE that is configured to transmit radio communication signals to the RU 1301 over the established communication channel.

The near-RT RIC 1304 may receive the channel information and the context information of the respective UE from the DU 1302 or the CU 1303. The near RT-RIC1304 may determine a timing parameter for the respective UE based on the channel information and the context information of the respective UE, and provide an output to configure timing of an uplink transmission of the respective UE, which the output represents the determined timing parameter to the DU 1302 or the CU 1303. Based on the provided output, the DU 1302 may and perform MAC layer functions to configure timing of an uplink transmission of the respective UE by issuing a timing advance command to be sent to the respective UE over the RU 1301. In various examples, the non-RT RIC 1306 may also include aspects of the device (e.g. the device 400) in a manner that is similar to the scenario in which the near RT-RIC 1304 includes the device (e.g. the device 400).

In accordance with various aspects provided herein, the AI/ML may be implemented in an entity other than the device. In various examples, any one of the entities provided within the exemplary RAN, in particular the DU 1302 or the CU 1303 may include aspects of a device (e.g. the device 400) provided herein, that is configured to obtain channel information and context information of a UE having an established connection with the RU 1301 and provide the input data that is based on the obtained channel information and context information to an AI/ML that is external to the DU 1302 or the CU 1303. In various examples, the near-RT RIC 1304 or the non-RT RIC 1306 may implement the AI/ML that is configured to determine a timing parameter for the respective UE. The entity that implements the AI/ML may provide information representing the determined timing parameter to the DU 1302, and based on the provided information, the DU 1302 may and perform MAC layer functions to configure timing of an uplink transmission of the respective UE by issuing a timing advance command to be sent to the respective UE over the RU 1301.

FIG. 14 exemplarily shows an illustration of a radio access network. A UE 1401 may include the communication device that is configured to perform an uplink transmission to a BS 1402 over a communication channel that is established between the UE 1401 and the BS 1402 according to various aspects provided in this disclosure. In various examples, the UE 1401 may communicate (directly or via radio access network over the BS 1402) with a further communication device 1403 that implements the AI/ML configured to determine a timing parameter representing a propagation delay for a transmission using the established communication channel. The UE 1401 may provide input data that is based on the channel information of the established communication channel and the context information of the UE 1401 to the further communication device 1403 that implements the AI/ML. The UE 1401 may then receive the determined timing parameter from the further communication device 1403 that implements the AI/ML and configure timing of an uplink transmission to the BS 1402 based on the received determined timing parameter.

In various examples, the BS 1402 may communicate with a further communication device 1403 that implements the AI/ML configured to determine a timing parameter representing a propagation delay for a transmission using the established communication channel. The BS 1402 may receive the channel information and the context information from the UE 1401 and obtain the input data as provided herein. The BS 1402 may then provide the input data to the further communication device 1403 that implements the AI/ML. The BS 1402 may then receive the determined timing parameter from the further communication device 1403 that implements the AI/ML and configure timing of an uplink transmission of the UE 1401 to the BS 1402 based on the received determined timing parameter.

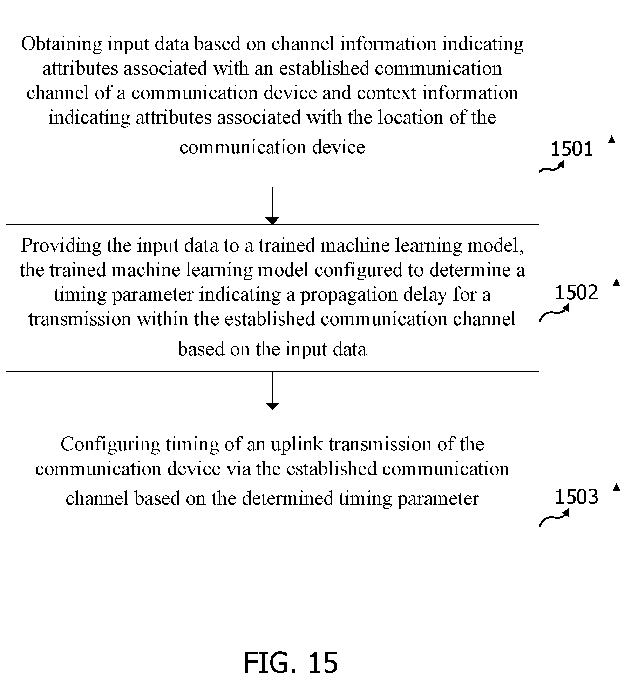

FIG. 15 shows an example of a method. The method that may include: obtaining 1501 input data based on channel information representing attributes associated with an established communication channel of a communication device and context information representing attributes associated with the location of the communication device; providing 1502 the input data to a trained machine learning model, the trained machine learning model configured to determine a timing parameter representing a propagation delay for a transmission within the established communication channel based on the input data; configuring 1503 timing of an uplink transmission of the communication device via the established communication channel based on the determined timing parameter.

The following examples pertain to further aspects of this disclosure.

In example 1, the subject matter includes a device including: a processor configured to: obtain input data based on channel information representing attributes associated with an established communication channel of a communication device and context information representing attributes associated with the location of the communication device; provide the input data to a trained machine learning model, the trained machine learning model configured to determine a timing parameter representing a propagation delay for a transmission within the established communication channel based on the input data; configure timing of an uplink transmission of the communication device via the established communication channel based on the determined timing parameter.

In example 2, the subject matter of example 1, can optionally include that the determined timing parameter includes a timing advance parameter representing a period of time at which the uplink transmission is to be transmitted before a time frame that is scheduled to receive the uplink transmission. In example 3, the subject matter of any one of examples 1 or 2, can optionally include that the trained machine learning model is configured to select the timing parameter from a plurality of timing parameter candidates. In example 4, the subject matter of any one of examples 1 to 3, can optionally include that the input data further includes at least one previously used timing advance parameter that was used to configure timing of one or more previous uplink transmissions.

In example 5, the subject matter of any one of examples 1 to 4, can optionally include that the channel information includes information representing, for the established communication channel, at least one of one or more measurements performed for the established communication channel, in-phase-quadrature samples of received radio communication signals, frequency domain components of received radio communication signals, a signal strength representor such as received signal strength representor (RSSI) obtained based on received radio communication signals, a reference signal power representor such as reference signal received power (RSRP) obtained based on received radio communication signals, path loss parameters obtained for the established communication channel. In example 6, the subject matter of any one of examples 1 to 5, can optionally include that the context information includes information representing a location of the communication device, a condition of the terrain associated with the location of the communication device, a velocity of the communication device, a heading of the communication device, a trajectory associated with the communication device, previous channel information associated with previous locations of the communication device.

In example 7, the subject matter of any one of examples 1 to 6, can optionally include that the input data is obtained based on the channel information and the context information for a plurality of previous time instances. In example 8, the subject matter of example 7, can optionally include that the input data includes a time-series data may include attributes of the channel information and the context information. In example 9, the subject matter of example 7 or 8, can optionally include that the trained machine learning model includes a recurrent neural network configured to receive the input data and determine the timing parameter based on features provided by the input data for a predefined number of previous time instances.

In example 10, the subject matter of example 9, can optionally include that the trained machine learning model includes a long short-term memory (LSTM) configured with a plurality of machine learning model parameters may include weights and activation functions. In example 11, the subject matter of any one of examples 1 to 10, can optionally include that the trained machine learning model includes a reinforcement learning model; can optionally include that the reinforcement learning model is configured to determine a reward parameter that is based on at least one of a received feedback, a number of retransmissions, or a number of radio link failures associated with the uplink transmission.

In example 12, the subject matter of any one of examples 1 to 11, can optionally include that the trained machine learning model includes machine learning model parameters, based on which the trained machine learning model determines the timing parameter; can optionally include that the trained machine learning model is configured to adjust the machine learning model parameters based on at least one of the following associated with the uplink transmission based on the determined parameter: a feedback received for the uplink transmission, a number of retransmissions, a number of radio link failures, a power level set for the uplink transmission, a performance parameter based on the throughput obtained with the determined timing parameter.

In example 13, the subject matter of any one of examples 1 to 12, can optionally include that the context information is received from the communication device; can optionally include that the processor is further configured to encode a message for a transmission to the communication device, can optionally include that the message represents the timing parameter to configure timing of the uplink transmission of the communication device. In example 14, the subject matter of example 13, can optionally include that the message is encoded via a medium access control layer - control element (MAC-CE) or a random access response (RAR) message representing the timing advance. In example 15, the subject matter of example 13 or 14, can optionally include that the channel information is received from the communication device.

In example 16, the subject matter of any one of examples 13 to 15, can optionally include that the context information and/or the channel information is obtained from the communication device using a minimization of drive tests (MDT) mechanism. In example 17, the subject matter of any one of examples 13 to 16, may further include: a transceiver configured to transmit and receive radio communication signals; a measurement circuit to perform measurements to obtain the channel information; can optionally include that the established communication channel is a communication channel between the communication device and the device. In example 18, the subject matter of any one of examples 13 to 17, can optionally include that the processor is configured to encode the message representing the determined timing parameter using the trained machine learning model for an uplink transmission to be performed at a first period of time for a transmission to the communication device at a first instance of time; can optionally include that the processor is further configured to estimate a period of time representing timing advance based on a propagation model, that is different than the trained machine learning model, for an uplink transmission to be performed at a second period of time; can optionally include that the processor is further configured to encode a second message representing the estimated period of time representing the timing advance based on the propagation model for a transmission to the communication device at a second instance of time.

In example 19, the subject matter of example 18, can optionally include that the propagation model estimates the period of time representing the timing advance based on received uplink reference radio communication signals. In example 20, the subject matter of any one of examples 17 to 19, can optionally include that the device is the communication device and can optionally include that the established communication channel includes a communication channel between the device and a base station; can optionally include: a transceiver configured to transmit and receive radio communication signals to the base station; a measurement circuit to perform measurements to obtain the channel information. In example 21, the subject matter of example 20, can optionally include that the processor is further configured to control the transceiver to perform the uplink transmission that is scheduled for a time frame at an instance of time before the scheduled time frame based on the determined timing parameter.

In example 22, the subject matter of example 20 or example 21, can optionally include that the processor is further configured to decode a received timing advance parameter from the base station; can optionally include that the uplink transmission is a first uplink transmission and the processor is configured to configure the first uplink transmission based on the determined timing parameter; can optionally include that the processor is further configured to configure timing of a second uplink transmission based on the received timing advance parameter. In example 23, the subject matter of example 22, can optionally include that the processor is further configured to decode a medium access control layer - control element (MAC-CE) or a random access response (RAR) message transmitted by the base station to obtain the received timing advance parameter.

In example 24, the subject matter includes a method that may include: obtaining input data based on channel information representing attributes associated with an established communication channel of a communication device and context information representing attributes associated with the location of the communication device; providing the input data to a trained machine learning model, the trained machine learning model configured to determine a timing parameter representing a propagation delay for a transmission within the established communication channel based on the input data; configuring timing of an uplink transmission of the communication device via the established communication channel based on the determined timing parameter.

In example 25, the subject matter of example 24, can optionally include that the determined timing parameter includes a timing advance parameter representing a period of time at which the uplink transmission is to be transmitted before a time frame that is scheduled to receive the uplink transmission. In example 26, the subject matter of any one of examples 24 or 25, may further include: selecting the timing parameter from a plurality of timing parameter candidates. In example 27, the subject matter of any one of examples 24 to 26, can optionally include that the input data further includes at least one previously used timing advance parameter that was used to configure timing of one or more previous uplink transmissions.

In example 28, the subject matter of any one of examples 24 to 27, can optionally include that the channel information includes information representing, for the established communication channel, at least one of one or more measurements performed for the established communication channel, in-phase-quadrature samples of received radio communication signals, frequency domain components of received radio communication signals, a signal strength representor such as received signal strength representor (RSSI) obtained based on received radio communication signals, a reference signal power representor such as reference signal received power (RSRP) obtained based on received radio communication signals, path loss parameters obtained for the established communication channel.

In example 29, the subject matter of any one of examples 24 to 28, can optionally include that the context information includes information representing a location of the communication device, a condition of the terrain associated with the location of the communication device, a velocity of the communication device, a heading of the communication device, a trajectory associated with the communication device, previous channel information associated with previous locations of the communication device. In example 30, the subject matter of any one of examples 24 to 29, obtaining the input data is obtained based on the channel information and the context information for a plurality of previous time instances.

In example 31, the subject matter of example 30, can optionally include that the input data includes a time-series data may include attributes of the channel information and the context information. In example 32, the subject matter of example 30 or 31, can optionally include that the trained machine learning model includes a recurrent neural network configured to receive the input data and determine the timing parameter based on features provided by the input data for a predefined number of previous time instances. In example 33, the subject matter of example 32, can optionally include that the trained machine learning model includes a long short-term memory (LSTM) configured with a plurality of machine learning model parameters may include weights and activation functions.

In example 34, the subject matter of any one of examples 24 to 33, can optionally include that the trained machine learning model includes a reinforcement learning model; can optionally include that the reinforcement learning model is configured to determine a reward parameter that is based on at least one of a received feedback, a number of retransmissions, or a number of radio link failures associated with the uplink transmission. In example 35, the subject matter of any one of examples 24 to 34, can optionally include that the trained machine learning model includes machine learning model parameters, based on which the trained machine learning model determines the timing parameter; can optionally include that the method further includes adjusting the machine learning model parameters based on at least one of the following associated with the uplink transmission based on the determined parameter: a feedback received for the uplink transmission, a number of retransmissions, a number of radio link failures, a power level set for the uplink transmission, a performance parameter based on the throughput obtained with the determined timing parameter.

In example 36, the subject matter of any one of examples 24 to 35, may further include: receiving the context information from the communication device; encoding a message for a transmission to the communication device, can optionally include that the message represents the timing parameter to configure timing of the uplink transmission of the communication device. In example 37, the subject matter of example 36, may further include: encoding the message via a medium access control layer - control element (MAC-CE) or a random access response (RAR) message representing the timing advance. In example 38, the subject matter of example 36 or 37, may further include: receiving the channel information from the communication device.

In example 39, the subject matter of any one of examples 36 to 38, may further include: obtaining the context information and/or the channel information from the communication device using a minimization of drive tests (MDT) mechanism. In example 40, the subject matter of any one of examples 36 to 39, may further include: transmitting and receiving radio communication signals; performing measurements on the transmitted or received radio communication signals to obtain the channel information; can optionally include that the established communication channel is a communication channel between the communication device and the device. In example 41, the subject matter of any one of examples 36 to 40, may further include: encoding the message representing the determined timing parameter using the trained machine learning model for an uplink transmission to be performed at a first period of time for a transmission to the communication device at a first instance of time; estimating a period of time representing timing advance based on a propagation model, that is different than the trained machine learning model, for an uplink transmission to be performed at a second period of time; encoding a second message representing the estimated period of time representing the timing advance based on the propagation model for a transmission to the communication device at a second instance of time.

In example 42, the subject matter of example 41, can optionally include that the propagation model estimates the period of time representing the timing advance based on received uplink reference radio communication signals. In example 43, the subject matter of any one of examples 40 to 42, can optionally include that the device is the communication device and can optionally include that the established communication channel includes a communication channel between the device and a base station. In example 44, the subject matter of example 43, may further include: controlling a transceiver to perform the uplink transmission that is scheduled for a time frame at an instance of time before the scheduled time frame based on the determined timing parameter. In example 45, the subject matter of example 43 or example 44, may further include: decoding a received timing advance parameter from the base station; configuring a first uplink transmission based on the determined timing parameter; can optionally include that the uplink transmission is the first uplink transmission; configuring timing of a second uplink transmission based on the received timing advance parameter. In example 46, the subject matter of example 45, may further include: decoding a medium access control layer - control element (MAC-CE) or a random access response (RAR) message transmitted by the base station to obtain the received timing advance parameter.

In example 47, the subject matter includes a non-transitory computer-readable medium that may include one or more instructions which, if executed by a processor, cause the processor to: obtain input data based on channel information representing attributes associated with an established communication channel of a communication device and context information representing attributes associated with the location of the communication device; provide the input data to a trained machine learning model, the trained machine learning model configured to determine a timing parameter representing a propagation delay for a transmission within the established communication channel based on the input data; configure timing of an uplink transmission of the communication device via the established communication channel based on the determined timing parameter. In example 48, the subject matter of example 47, can optionally include that the one or more instructions may further cause the processor to provide operations or features associated with the processor in examples 1-23,

In example 49, the subject matter includes a device that may include: means for obtaining input data based on channel information representing attributes associated with an established communication channel of a communication device and context information representing attributes associated with the location of the communication device; means for providing the input data to a trained machine learning model, the trained machine learning model configured to determine a timing parameter representing a propagation delay for a transmission within the established communication channel based on the input data; means for configuring timing of an uplink transmission of the communication device via the established communication channel based on the determined timing parameter. In example 50, the subject matter of example 49, can optionally include that the device may further include means to provide operations or features in examples 1-23,

In example 51, the subject matter includes a communication device that may include: a processor configured to: obtain input data based on channel information representing attributes associated with an established communication channel between the communication device and a further communication device and context information representing attributes associated with the location of the communication device; determine a timing parameter representing a propagation delay associated with the established communication channel based on the input data using a trained machine learning model; configure timing of an uplink transmission to the further communication device to perform the uplink transmission in advance of a scheduled time frame based on the determined timing parameter. In example 52, the subject matter of example 49, can optionally include that the device may further include means to provide operations or features in examples 1-23. In example 53, the subject matter of example 51 or 52, can optionally include that the communication device is a UE.

In example 54, the subject matter includes a communication device that may include: a processor configured to: obtain input data based on channel information representing attributes associated with an established communication channel between the communication device and a further communication device and received context information representing attributes associated with the location of the further communication device; determine a timing parameter representing a propagation delay associated with the established communication channel based on the input data using a trained machine learning model; encode a message representing a timing advance of an uplink transmission to be transmitted by the further communication device for a transmission to the further communication device. In example 55, the subject matter of example 54, can optionally include that the device may further include means to provide operations or features in examples 1-23. In example 56, the subject matter of example 54 or 55, can optionally include that the communication device is a BS.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal that is "indicative of" or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor or 9. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more."

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D Points, among others, or any combination thereof. Registers, shift registers, processor registers, data buffers, among others, are also embraced herein by the term memory. The term "software" refers to any type of executable instruction, including firmware.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

The term "antenna", as used herein, may include any suitable configuration, structure and/or arrangement of one or more antenna elements, components, units, assemblies and/or arrays. The antenna may implement transmit and receive functionalities using separate transmit and receive antenna elements. The antenna may implement transmit and receive functionalities using common and/or integrated transmit/receive elements. The antenna may include, for example, a phased array antenna, a single element antenna, a set of switched beam antennas, and/or the like.

It will be understood that when an element is referred to as being "connected" or "coupled" to another element, it can be physically connected or coupled to the other element such that current and/or electromagnetic radiation (e.g., a signal) can flow along a conductive path formed by the elements. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), Spatial Divisional Multiple Access (SDMA), Time-Division Multiplexing (TDM), Time-Division Multiple Access (TDMA), Multi-User MIMO (MU-MIMO), General Packet Radio Service (GPRS), extended GPRS (EGPRS), Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth (BT), Global Positioning System (GPS), Wi-Fi, Wi-Max, ZigBeeTM, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other aspects may be used in various other devices, systems and/or networks.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN, and the like.

Some aspects may be used in conjunction with a wireless communication network communicating over a frequency band of 2.4GHz, 5GHz, and/or 6-7GHz. However, other aspects may be implemented utilizing any other suitable wireless communication frequency bands, for example, an Extremely High Frequency (EHF) band (the millimeter wave (mmWave) frequency band), e.g., a frequency band within the frequency band of between 20GHz and 300GHz, a WLAN frequency band, a WPAN frequency band, and the like.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

## Claims

1. A device comprising:
a processor configured to:
obtain input data based on channel information representing attributes associated with an established communication channel of a communication device and context information representing attributes associated with the location of the communication device;
provide the input data to a trained machine learning model, the trained machine learning model configured to determine a timing parameter representing a propagation delay for a transmission within the established communication channel based on the input data;
configure timing of an uplink transmission of the communication device via the established communication channel based on the determined timing parameter.

2. The device of claim 1,
wherein the determined timing parameter comprises a timing advance parameter representing a period of time at which the uplink transmission is to be transmitted before a time frame that is scheduled to receive the uplink transmission.

3. The device of any one of claims 1 or 2,
wherein the trained machine learning model is configured to select the timing parameter from a plurality of timing parameter candidates.

4. The device of any one of claims 1 to 3,
wherein the input data further comprises at least one previously used timing advance parameter that was used to configure timing of one or more previous uplink transmissions.

5. The device of any one of claims 1 to 4,
wherein the channel information comprises information representing, for the established communication channel, at least one of one or more measurements performed for the established communication channel, in-phase-quadrature samples of received radio communication signals, frequency domain components of received radio communication signals, a signal strength indicator such as received signal strength indicator (RSSI) obtained based on received radio communication signals, a reference signal power indicator such as reference signal received power (RSRP) obtained based on received radio communication signals, path loss parameters obtained for the established communication channel.

6. The device of any one of claims 1 to 5,
wherein the context information comprises information representing a location of the communication device, a condition of the terrain associated with the location of the communication device, a velocity of the communication device, a heading of the communication device, a trajectory associated with the communication device, previous channel information associated with previous locations of the communication device.

7. The device of any one of claims 1 to 6,
wherein the input data is obtained based on the channel information and the context information for a plurality of previous time instances;
wherein the input data comprises a time-series data comprising attributes of the channel information and the context information.

8. The device of any one of claims 1 to 7,
wherein the trained machine learning model comprises a long short-term memory (LSTM) configured with a plurality of machine learning model parameters comprising weights and activation functions.

9. The device of any one of claims 1 to 8,
wherein the trained machine learning model comprises a reinforcement learning model;
wherein the reinforcement learning model is configured to determine a reward parameter that is based on at least one of a received feedback, a number of retransmissions, or a number of radio link failures associated with the uplink transmission.

10. The device of any one of claims 1 to 9,
wherein the trained machine learning model comprises machine learning model parameters, based on which the trained machine learning model determines the timing parameter;
wherein the trained machine learning model is configured to adjust the machine learning model parameters based on at least one of the following associated with the uplink transmission based on the determined parameter: a feedback received for the uplink transmission, a number of retransmissions, a number of radio link failures, a power level set for the uplink transmission, a performance parameter based on the throughput obtained with the determined timing parameter.

11. The device of any one of claims 1 to 10,
wherein the device is a base station;
wherein the context information is received from the communication device using a minimization of drive tests (MDT) mechanism;
wherein the processor is further configured to encode a message for a transmission to the communication device, wherein the message comprises information that represents the timing parameter to configure timing of the uplink transmission of the communication device.

12. The device of claim 11,
wherein the message is encoded via a medium access control layer - control element (MAC-CE) or a random access response (RAR) message comprises information representing the timing advance.

13. The device of any one of claims 1 to 10,
wherein the device is a user equipment;
wherein the device further comprises: a transceiver configured to transmit and receive radio communication signals, and a measurement circuit to perform measurements to obtain the channel information.

14. A non-transitory computer-readable medium comprising one or more instructions which, if executed by a processor, cause the processor to:
obtain input data based on channel information representing attributes associated with an established communication channel of a communication device and context information representing attributes associated with the location of the communication device;
provide the input data to a trained machine learning model, the trained machine learning model configured to determine a timing parameter representing a propagation delay for a transmission within the established communication channel based on the input data;
configure timing of an uplink transmission of the communication device via the established communication channel based on the determined timing parameter.

15. The non-transitory computer-readable medium of claim 14,
wherein the determined timing parameter comprises a timing advance parameter representing a period of time at which the uplink transmission is to be transmitted before a time frame that is scheduled to receive the uplink transmission.
